# EUROPEAN PATENT APPLICATION

(11) **EP 4 615 078 A1**
(43) Date of publication of application: **10.09.2025**
(21) Application number: 22963986.9
(22) Date of filing: 03.11.2022
(51) Int. Cl.: H04W 64/00

(54) **POSITIONING PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/129687
(87) International publication number: WO 2024/092676

(57) **Abstract**

Provided in the embodiments of the present disclosure is a positioning processing method, wherein the method is executed by an access network device or a network function. The method comprises: sending indication information to a terminal, wherein the indication information is used for the terminal to determine whether to send an uplink positioning reference signal request. By means of the method, after receiving the indication information, the terminal can determine, on the basis of the indication information, whether the uplink positioning reference signal request can be sent. Compared with situations in the relevant art in which it cannot be determined whether an uplink positioning reference signal request can be sent, whether to send or not to send an uplink positioning reference signal request can be clearly determined, such that the number of occasions in which the sending of the uplink positioning reference signal request is not accepted can be reduced, thereby reducing resource occupation, and improving the reliability of wireless communication.

## Description

### TECHNICAL FIELD

The disclosure relates to, but is not limited to, the field of wireless communication technology, and specifically to a positioning processing method and a positioning processing apparatus, a communication device, and a storage medium.

### BACKGROUND

A plurality of positioning technologies are introduced into the fifth generation mobile communication technology (5G) new radio (NR) to achieve positioning a terminal. When uplink (UL) positioning technology and positioning technology based on UL and downlink (DL) are adopted, a network needs to configure a UL positioning reference signal for the terminal, and the terminal sends the UL positioning reference signal based on configuration information of the UL positioning reference signal. There is a problem that needs to be considered how the terminal requests the network to configure the UL positioning reference signal for the terminal.

### SUMMARY

Embodiments of the disclosure provide a positioning processing method and a positioning processing apparatus, a communication device, and a storage medium.

According to a first aspect of the embodiments of the disclosure, a positioning processing method is provided. The method is performed by an access network device or a network function, including: sending indication information to a terminal, in which the indication information is used by the terminal to determine whether to send an uplink (UL) positioning reference signal request.

In an embodiment, the network function is a location management function (LMF).

In an embodiment, the indication information indicates at least one of: allowing the terminal to send the UL positioning reference signal request; or a condition that the terminal sends the UL positioning reference signal request.

In an embodiment, the condition includes at least one of: configuration of a UL positioning reference signal being invalid; a network configuring a UL grant for the terminal to send the UL positioning reference signal request; the network configuring a random access channel (RACH) resource for the terminal to send the UL positioning reference signal request; a UL positioning reference signal being configured in a system message; or a message received by the terminal including indication information for indicating the terminal to send the UL positioning reference signal request.

In an embodiment, the method includes at least one of: in response to the terminal moving out of a valid area of the UL positioning reference signal, determining that the configuration of the UL positioning reference signal is invalid; in response to a timer for the UL positioning reference signal being expired, determining that the configuration of the UL positioning reference signal is invalid; in response to a reference signal receiving power (RSRP) measured by the terminal not meeting a requirement pre-configured by the network, determining that the configuration of the UL positioning reference signal is invalid; in response to a power for the terminal to send the UL positioning reference signal not meeting a requirement configured by the network, determining that the configuration of the UL positioning reference signal is invalid; or in response to a timing advance (TA) for the terminal to send the UL positioning reference signal not meeting a requirement configured by the network, determining that the configuration of the UL positioning reference signal is invalid.

In an embodiment, sending the indication information to the terminal includes: in response to determining that the terminal switches from a radio resource control (RRC) connected state to an RRC inactive state or the terminal switches from the RRC connected state to an RRC idle state, sending the indication information to the terminal.

According to a second aspect of the embodiments of the disclosure, a positioning processing method is provided. The method is performed by a terminal, including: receiving indication information, in which the indication information is used by the terminal to determine whether to send a UL positioning reference signal request.

In an embodiment, receiving the indication information includes: receiving the indication information sent by an access network device; or receiving the indication information sent by a network function.

In an embodiment, the network function is an LMF.

In an embodiment, the indication information indicates at least one of: allowing the terminal to send the UL positioning reference signal request; or a condition that the terminal sends the UL positioning reference signal request.

In an embodiment, the condition includes at least one of: configuration of a UL positioning reference signal being invalid; a network configuring a UL grant for the terminal to send the UL positioning reference signal request; the network configuring a RACH resource for the terminal to send the UL positioning reference signal request; a UL positioning reference signal being configured in a system message; or a message received by the terminal including indication information for indicating the terminal to send the UL positioning reference signal request.

In an embodiment, the method includes at least one of: in response to the terminal moving out of a valid area of the UL positioning reference signal, determining that the configuration of the UL positioning reference signal is invalid; in response to a timer for the UL positioning reference signal being expired, determining that the configuration of the UL positioning reference signal is invalid; in response to an RSRP measured by the terminal not meeting a requirement pre-configured by the network, determining that the configuration of the UL positioning reference signal is invalid; in response to a power for the terminal to send the UL positioning reference signal not meeting a requirement configured by the network, determining that the configuration of the UL positioning reference signal is invalid; or in response to a TA for the terminal to send the UL positioning reference signal not meeting a requirement configured by the network, determining that the configuration of the UL positioning reference signal is invalid.

In an embodiment, receiving the indication information includes: in response to determining that the terminal switches from an RRC connected state to an RRC inactive state or the terminal switches from the RRC connected state to an RRC idle state, receiving the indication information.

According to a third aspect of the embodiments of the disclosure, a positioning processing apparatus is provided. The apparatus includes: a sending module, configured to indication information to a terminal, in which the indication information is used by the terminal to determine whether to send a UL positioning reference signal request.

According to a fourth aspect of the embodiments of the disclosure, a positioning processing apparatus is provided. The apparatus includes: a sending module, configured to indication information to a terminal, in which the indication information is used by the terminal to determine whether to send a UL positioning reference signal request.

According to a fifth aspect of the embodiments of the disclosure, a communication device is provided. The communication device includes: a processor; a memory storing instructions executable by the processor. The processor is configured to execute the executable instructions to implement the method of any embodiments of the disclosure.

According to a sixth aspect of the embodiments of the disclosure, a computer storage medium is provided. The computer storage medium stores a computer-executable program which, when executed by a processor, implements the method of any embodiments of the disclosure.

In the embodiments of the disclosure, indication information is sent to a terminal, in which the indication information is information used by the terminal to determine whether to send a UL positioning reference signal request. In this way, after the terminal receives the indication information, it may be determined whether to send the UL positioning reference signal based on the indication information. In other words, the terminal may determine whether to send the UL positioning reference signal request based on the indication information from the network. In this way, the situation may be reduced where the UL positioning reference signal request is still sent although the network does not allow the terminal to send the UL positioning reference signal request, which reduces resource occupation and improves the reliability of wireless communication.

### BRIEF DESCRIPTION OF THE DRAWINGS

FIG. 1 is a structural diagram illustrating a wireless communication system according to an example embodiment.
FIG. 2 is a flowchart illustrating a positioning processing method according to an example embodiment.
FIG. 3 is a flowchart illustrating a positioning processing method according to an example embodiment.
FIG. 4 is a flowchart illustrating a positioning processing method according to an example embodiment.
FIG. 5 is a flowchart illustrating a positioning processing method according to an example embodiment.
FIG. 6 is a flowchart illustrating a positioning processing method according to an example embodiment.
FIG. 7 is a flowchart illustrating a positioning processing method according to an example embodiment.
FIG. 8 is a flowchart illustrating a positioning processing method according to an example embodiment.
FIG. 9 is a flowchart illustrating a positioning processing method according to an example embodiment.
FIG. 10 is a flowchart illustrating a positioning processing method according to an example embodiment.
FIG. 11 is a flowchart illustrating a positioning processing method according to an example embodiment.
FIG. 12 is a flowchart illustrating a positioning processing method according to an example embodiment.
FIG. 13 is a structural diagram illustrating a terminal according to an example embodiment.
FIG. 14 is a block diagram illustrating a base station according to an example embodiment.
FIG. 15 is a block diagram illustrating a network architecture according to an example embodiment.

### DETAILED DESCRIPTION

Reference will now be made in detail to the example embodiments, examples of which are illustrated in the accompanying drawings. When the following description refers to the drawings, unless otherwise indicated, the same numbers in different drawings represent the same or similar elements. The implementations described in the following exemplary embodiments do not represent all implementations consistent with the embodiments of the disclosure. Rather, they are merely examples of apparatuses and methods consistent with some aspects of the disclosure as recited in the accompanying claims.

Terms used in the embodiments of the disclosure are for the purpose of describing specific embodiments only, and are not intended to limit the embodiments of the disclosure. As used in the examples of this disclosure and the appended claims, the singular forms "a/an", "said" and "the" are also intended to include the plural forms unless the context clearly dictates otherwise. It should also be understood that the term "and/or" as used herein refers to and includes any and all possible combinations of one or more associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" as used herein may be interpreted as "upon" or "when" or "in response to determining".

For the purpose of brevity and ease of understanding, the terms "greater than" or "less than" are used herein to represent size relationships. However, it may be understood by those skilled in the art that the term "greater than" also covers the meaning of "greater than or equal to", and "less than" also covers the meaning of "less than or equal to".

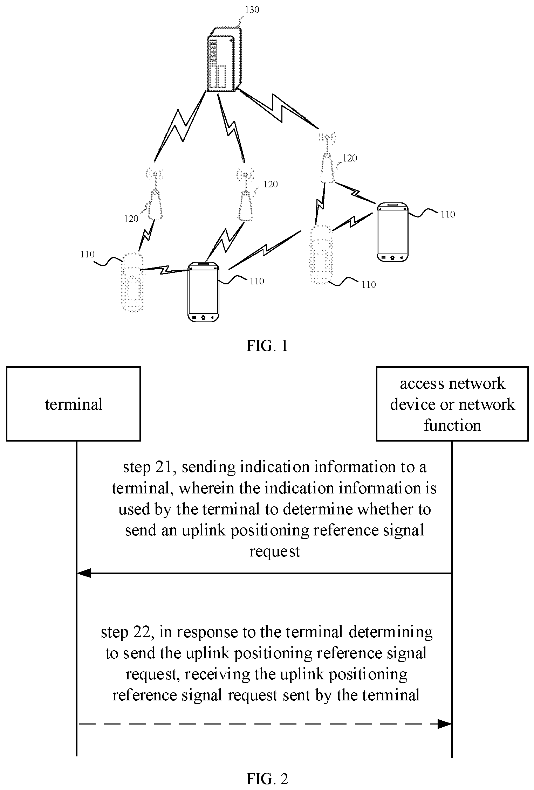

Referring to FIG. 1, it illustrates a structural diagram of a wireless communication system according to an embodiment of the present disclosure. As illustrated in FIG. 1, the wireless communication system is a communication system based on mobile communication technology, and the wireless communication system may include: at least one user equipment (UE) 110 and at least one access network node. For example, the access network node may be a base station 120. The UE 110 may be a terminal. Here, the terminal involved in the present disclosure may be but is not limited to a mobile phone, a wearable device, a vehicle-mounted terminal, a roadside unit (RSU), a smart home terminal, an industrial sensor device and/or a medical device, etc. In some embodiments, the terminal may be a Redcap terminal or a new radio (NR) terminal of a predetermined version (e.g., an NR terminal of Release 17).

The UE 110 may be a device that provides voice and/or data connectivity to a user. The UE 110 may communicate with one or more core networks via a radio access network (RAN). The UE 110 may be an Internet of Things (IoT) UE, such as a sensor device, a mobile phone and a computer having the IoT UE, which for example, may be a fixed, portable, pocket-sized, handheld, computer built-in, or vehicle-mounted device, for example, a station (STA), a subscriber unit, a subscriber station, a mobile station, a mobile, a remote station, an access point, a remote terminal, an access terminal, a user terminal, a user agent, a user device, or a UE. Alternatively, the UE 110 may be an unmanned aerial vehicle device. Alternatively, the UE 110 may be a vehicle-mounted device, such as, an electronic control unit (ECU) with a wireless communication function, or a wireless communication device externally connected to the ECU. Alternatively, the UE 110 may be a roadside device, e.g., a streetlamp, a signal lamp, or other roadside devices, etc., with a wireless communication function.

The base station 120 may be a network-side device in the wireless communication system. The wireless communication system may be the 4th generation mobile communication (4G) system, also called a long term evolution (LTE) system. Alternatively, the wireless communication system may also be a 5G system, also called as a new radio (NR) system or a 5G NR system. Alternatively, the wireless communication system may also be a next generation system of the 5G system or other future wireless communication systems. The access network in the 5G system may be referred to as a new generation-radio access network (NG-RAN).

The base station 120 may be an evolved base station (i.e., evolved NodeB, eNB) employed in the 4G system. Alternatively, the base station 120 may be a base station (e.g., gNB) employing a centralized distributed architecture in the 5G system. When the base station 120 adopts the centralized distributed architecture, the base station 120 generally includes a central unit (CU) and at least two distributed units (DU). The central unit is provided with protocol stacks for a packet data convergence protocol (PDCP) layer, a radio link control (RLC) protocol layer and a media access control (MAC) layer. The distributed unit is provided with protocol stacks for a physical (PHY) layer. Embodiments of the disclosure do not limit the specific implementation of the base station 120.

A wireless connection may be established between the base station 120 and the UE 110 through a radio interface or an air interface. In various embodiments, the radio interface may be a radio interface based on the 4th generation mobile communication network technology (4G) standard. Alternatively, the radio interface may be a radio interface based on a 5th generation mobile communication network technology (5G) standard, for example, the radio interface is a new radio. Alternatively, the radio interface may be a radio interface based on a further next-generation mobile communication network technology standard relative to 5G or a radio interface based on other future wireless communication technology standards.

In some embodiments, an E2E (End to End) connection, for example, a V2V (vehicle to vehicle) communication, a V2I (vehicle to infrastructure) communication, and a V2P (vehicle to pedestrian) communication and other scenarios in vehicle to everything (V2X) communication, may also be established between the UEs 110.

In this case, the UE may be considered to be the terminal in the following embodiment.

In some embodiments, the wireless communication system described above may also include a core network device 130.

The base station 120 is connected to the core network device 130. The core network device 130 may be a core network device in a wireless communication system. Here, the core network device may correspond to network functions, such as an access and mobility management function (AMF), a user plane function (UPF) and a session management function (SMF) and other communication nodes. The embodiments of the present disclosure do not limit the implementation form of the core network device 130.

In some embodiments of the present application, the core network device 130 includes a network function that provides a positioning function. For example, in a 5G network, a location management function (LMF) is a network element, a module or a component that provides a positioning function. For another example, in a 4G network, an evolved serving mobile location center (ESMLC) is a network element, a module or a component that provides a positioning function. It may be understood that in other networks, it may be other function network elements.

It needs to be noted that, in some other embodiments, the access network node may be also integrated with a module or a component with a positioning function. In this example, the access network node is a network element, a module or a component that provides a positioning function.

In order to facilitate the understanding of those skilled in the art, embodiments of the disclosure enumerate a plurality of implementations to provide a clear illustration for the technical solutions of embodiments of the disclosure. Those skilled in the art may understand that the plurality of embodiments provided in the embodiments of the disclosure may be performed individually, may be performed together with the methods of other embodiments in the embodiments of the disclosure in combination, or may be performed individually or in combination with a number of methods in other related art. The embodiments of the disclosure do not limit this.

First, the application scenarios involved in the present disclosure are described:
In an embodiment, positioning of a terminal in a radio resource control (RRC) inactive state is supported. That is, the terminal may send a UL positioning reference signal when it is in the RRC inactive state. In an example, when the terminal is transitioned from an RRC connected state to the RRC inactive state, the base station configures a UL positioning reference signal for the terminal through an RRC release message. The detailed configuration information may be included in the field srs-PosRRC-InactiveConfig. Furthermore, if the terminal performs a cell reselection, the terminal needs to release the UL positioning reference signal configured by the base station for the terminal. Here, "releasing" may be understood as making the configured UL positioning reference signal invalid, or making the configuration information invalid.

In another embodiment, positioning of the terminal in the RRC connected state is supported, that is, the terminal may send the UL positioning reference signal when it is in the RRC connected state. In an example, the base station may configure the UL positioning reference signal for the terminal through an RRC reconfiguration message, such as an RRC reconfiguration message. Furthermore, if the terminal performs a cell handover, the terminal also needs to release the UL positioning reference signal configured by the base station for the terminal. Here, "releasing" may be understood as making the configured UL positioning reference signal invalid, or making the configuration information invalid.

In an embodiment, the process that the network configures the UL positioning reference signal for the terminal may include that, an LMF sends a request message to a base station, for example, through an NR positioning protocol A (NRPPa) message, where the request message is used to request the base station to configure the UL positioning reference signal for the terminal, and the base station determines UL positioning reference signal configuration information and configures the UL positioning reference signal for the terminal through an RRC message. In an embodiment, the base station sends the UL positioning reference signal configuration information for the terminal to the LMF.

In an embodiment, the terminal may send UL positioning reference signal request information to the base station, where the UL positioning reference signal request information is used to request the base station to configure the UL positioning reference signal for the terminal.

It may be understood that the network architecture and application scenarios described in the embodiments of the present disclosure are intended to more clearly illustrate the technical solutions of the embodiments of the present disclosure, and do not constitute a limitation on the technical solutions according to the embodiments of the present disclosure. Those skilled in the art may know that with the evolution of system architecture and the emergence of new service scenarios, the technical solutions according to the embodiments of the present disclosure are also applicable to similar technical problems.

As illustrated in FIG. 2, the embodiment provides a positioning processing method. The method is performed by an access network device or a network function, and the method includes the following step 21.

At step 21, indication information is sent to the terminal.

The indication information is used by the terminal to determine whether to send a UL positioning reference signal request. In an example, the indication information indicates at least one of: whether the terminal is allowed to send the UL positioning reference signal request; or a condition for allowing the terminal to send the UL positioning reference signal request.

Optionally, if the terminal is not allowed to send the UL positioning reference signal request, the terminal will not send the UL positioning reference signal request to the base station. Alternatively, if the terminal is allowed to send the UL positioning reference signal request but does not meet the condition for sending the UL positioning reference signal request, the terminal will not send the UL positioning reference signal request to the base station.

Optionally, the method may further include step 22. At step 22, in response to the terminal determining to send the UL positioning reference signal request, the UL positioning reference signal request sent by the terminal is received.

Here, the terminal involved in the present disclosure may be but is not limited to a mobile phone, a wearable device, a vehicle-mounted terminal, an RSU, a smart home terminal, an industrial sensor device and/or a medical device, etc. In some embodiments, the terminal may be a Redcap terminal or an NR terminal of a predetermined version (e.g., an NR terminal of Release 17).

The access network device involved in the present disclosure may be a base station, and the base station may be various types of base stations, for example, a base station of a third generation mobile communication (3G) network, a base station of a 4G network, a base station of a 5G network, or other evolved base stations.

The network function involved in the present disclosure may be a device in a core network. For example, the network function may be an LMF. Of course, the network function may also be other evolved network functions, which is not limited here. For example, in a 5G network, the LMF is a network function that provides a positioning function. For another example, in a 4G network, an ESMLC is a network function that provides a positioning function. It may be understood that in other networks, it may be other network functions.

In an embodiment, indication information is sent to the terminal, in which the indication information is used by the terminal to determine whether to send the UL positioning reference signal request. The UL positioning reference signal request is used to request the base station to configure the UL positioning reference signal for the terminal.

In an embodiment, indication information is sent to the terminal, in which the indication information indicates that the terminal is allowed to send the UL positioning reference signal request. The UL positioning reference signal request is used to request the base station to configure the UL positioning reference signal for the terminal.

In an embodiment, indication information is sent to the terminal, in which the indication information indicates that the terminal is not allowed to send the UL positioning reference signal request. The UL positioning reference signal request is used to request the base station to configure the UL positioning reference signal for the terminal. For example, when the network does not support positioning of the terminal based on the UL positioning reference signal and/or a positioning resource used for positioning is less than a resource threshold, the network does not allow the terminal to send the UL positioning reference signal request.

In an embodiment, indication information is sent to the terminal, in which the indication information indicates allowing the terminal to send the UL positioning reference signal request, and the condition for the terminal to send the UL positioning reference signal request. The UL positioning reference signal request is used to request the base station to configure a UL positioning reference signal for the terminal. For example, when the network supports the positioning of the terminal based on the UL positioning reference signal and/or the positioning resource used for positioning is greater than the resource threshold, the network allows the terminal to send the UL positioning reference signal request.

In an embodiment, indication information is sent to the terminal, in which the indication information indicates the condition for the terminal to send the UL positioning reference signal request. The UL positioning reference signal request is used to request the base station to configure the UL positioning reference signal for the terminal. For example, the indication information indicates that the terminal sends the UL positioning reference signal request and indicates a condition that the terminal sends the UL positioning reference signal request, in which the condition includes a condition for the terminal to send the UL positioning reference signal request.

It should be noted that the "indication" in the embodiments of the present application includes explicit indication and implicit indication. For example, the network may explicitly indicate the condition for the terminal to send the UL positioning reference signal request. In an example, it may be considered that the network indicates in an implicit indication manner that the terminal is allowed to send the UL positioning reference signal request. Alternatively, the network does not explicitly indicate the condition for the terminal to send the UL positioning reference signal request. In this example, it may be considered that the network indicates in an implicit manner that the terminal is not allowed to send the UL positioning reference signal request.

In an embodiment, the base station sends indication information to the terminal, in which the indication information is used by the terminal to determine whether to send the UL positioning reference signal request. The UL positioning reference signal request is used to request the base station to configure the UL positioning reference signal for the terminal.

In an embodiment, the base station sends indication information to the terminal via an RRC message, in which the indication information is used by the terminal to determine whether to send the UL positioning reference signal request. The UL positioning reference signal request is used to request the base station to configure the UL positioning reference signal for the terminal. It needs to be noted that the base station may configure the indication information is carried in a predetermined field in the RRC message. For example, the RRC message is, for example, an RRC release message (RRC release) or an RRC reconfiguration message (RRC reconfiguration).

In an embodiment, the network function is the LMF.

In an embodiment, the LMF sends indication information to the terminal via the base station, in which the indication information is used by the terminal to determine whether to send the UL positioning reference signal request. The UL positioning reference signal request is used to request the base station to configure the UL positioning reference signal for the terminal.

In an embodiment, the LMF sends indication information to the terminal via the base station through a Long Term Evolution Positioning Protocol (LTE Positioning Protocol, LPP) message, in which the indication information is used by the terminal to determine whether to send the UL positioning reference signal request. The UL positioning reference signal request is used to request the base station to configure the UL positioning reference signal for the terminal.

In an embodiment, indication information is sent to the terminal, in which the indication information indicates allowing the terminal to send the UL positioning reference signal request or prohibiting the terminal from sending the UL positioning reference signal request. The UL positioning reference signal request is used to request the base station to configure the UL positioning reference signal for the terminal. In this way, if the indication information indicates allowing the terminal to send the UL positioning reference signal request, the terminal may send the UL positioning reference signal request to the base station to request the base station to configure the UL positioning reference signal for the terminal. If the indication information indicates prohibiting the terminal from sending the UL positioning reference signal request, the terminal cannot send the UL positioning reference signal request to the base station to request the base station to configure the UL positioning reference signal for the terminal. Alternatively, if the indication information indicates prohibiting the terminal from sending the UL positioning reference signal request, the base station will not respond to the UL positioning reference signal request.

In an embodiment, information allowing the terminal to send the UL positioning reference signal request is determined based on a predetermined communication protocol, and indication information is sent to the terminal, in which the indication information indicates the condition for the terminal to send the UL positioning reference signal request. The UL positioning reference signal request is used to request the base station to configure the UL positioning reference signal for the terminal.

In an embodiment, information allowing the terminal to send the UL positioning reference signal request is determined based on pre-configured configuration information, and indication information is sent to the terminal, in which the indication information indicates the condition for the terminal to send the UL positioning reference signal request. The UL positioning reference signal request is used to request the base station to configure the UL positioning reference signal for the terminal.

In this way, after receiving the indication information, if the terminal meets the condition for sending the UL positioning reference signal request, the terminal may send the UL positioning reference signal request to the base station to request the base station to configure a UL positioning reference signal for the terminal. If the terminal does not meet the condition for sending the UL positioning reference signal request, the terminal cannot send the UL positioning reference signal request to the base station to request the base station to configure a UL positioning reference signal for the terminal. In this way, whether to send a UL reference signal request may be adapted to the indication of the base station, and it may be clearly determined whether to send the UL positioning reference signal request. As such, the situation may be reduced where the UL positioning reference signal request is still sent although the network does not allow the terminal to send the UL positioning reference signal request, which reduces resource occupation and improves the reliability of wireless communication.

In an embodiment, a condition for sending the UL positioning reference signal request to the terminal is determined based on a predetermined communication protocol, and indication information is sent to the terminal, in which the indication information indicates information allowing the terminal to send the UL positioning reference signal request.

In an embodiment, the condition for sending the UL positioning reference signal request to the terminal is determined based on pre-configured configuration information, and indication information is sent to the terminal, in which the indication information indicates information allowing the terminal to send the UL positioning reference signal request.

In an embodiment, indication information is sent to the terminal, in which the indication information indicates information allowing the terminal to send the UL positioning reference signal request, and a condition for the terminal to send the UL positioning reference signal request. The UL positioning reference signal request is used to request the base station to configure the UL positioning reference signal for the terminal. The condition includes at least one of: configuration of a UL positioning reference signal being invalid; a network configuring a UL grant for the terminal to send the UL positioning reference signal request; the network configuring a random access channel (RACH) resource for the terminal to send the UL positioning reference signal request; a UL positioning reference signal being configured in a system message; or a message received by the terminal including indication information for indicating the terminal to send the UL positioning reference signal request. For example, the message is a paging message.

It needs to be noted that, in some examples, the UL positioning reference signal is configured for the terminal. Even though the UL positioning reference signal may be configured in the system message broadcast and sent by the network, the terminal also needs to obtain the UL positioning reference signal configured by the network for the terminal through interaction with the base station.

In an embodiment, indication information is sent to the terminal, in which the indication information indicates a condition for the terminal to send the UL positioning reference signal request. The UL positioning reference signal request is used to request the base station to configure the UL positioning reference signal for the terminal. The condition includes at least one of: configuration of a UL positioning reference signal being invalid; a network configuring a UL grant for the terminal to send the UL positioning reference signal request; the network configuring a RACH resource for the terminal to send the UL positioning reference signal request; a UL positioning reference signal being configured in a system message; or a paging message received by the terminal including indication information for indicating the terminal to send the UL positioning reference signal request.

In an example, the way of determining that the configuration of the UL positioning reference signal is invalid may include at least one of:
in response to the terminal moving out of a valid area of the UL positioning reference signal, determining that the configuration of the UL positioning reference signal is invalid;
in response to a timer for the UL positioning reference signal being expired, determining that the configuration of the UL positioning reference signal is invalid;
in response to an RSRP measured by the terminal not meeting a requirement pre-configured by the network, determining that the configuration of the UL positioning reference signal is invalid;
in response to a power for the terminal to send the UL positioning reference signal not meeting a requirement configured by the network, determining that the configuration of the UL positioning reference signal is invalid; or
in response to a TA for the terminal to send the UL positioning reference signal not meeting a requirement configured by the network, determining that the configuration of the UL positioning reference signal is invalid.

In some examples, when configuring a UL positioning reference signal for a terminal, the base station also configures the valid area of the UL positioning reference signal, where the valid area includes, for example, a cell list. In other words, when the terminal is located within the valid area of the UL positioning reference signal, the UL positioning reference signal configured by the base station may be used for positioning. When the terminal is located outside the valid area of the UL positioning reference signal, the UL positioning reference signal cannot be used for positioning. For example, in a cell reselection or cell handover scenario, when the cell to which the terminal reselects or performs handover is not located within the valid area, the configuration of the UL positioning reference signal is invalid. When the cell to which the terminal reselects or performs handover is located within the valid area, the configuration of the UL positioning reference signal is valid.

In an embodiment, when configuring the UL positioning reference signal for the terminal, the base station also configures the timer for the UL positioning reference signal. The timer for the UL positioning reference signal is used to perform timing on a valid period of the configuration of the UL positioning reference signal. When the timer expires, the configuration of the UL positioning reference signal is invalid.

In an embodiment, the timer for the UL positioning reference signal may be started when the terminal receives the configuration of the UL positioning reference signal.

In an embodiment, the RSRP measured by the terminal not meeting the requirement pre-configured by the network may be that the RSRP is less than an RSRP threshold, where the RSRP may be configured by the network.

In an embodiment, the power of the UL positioning reference signal sent by the terminal not meeting the requirement configured by the network may be that the power is less than a power threshold, where the power threshold may be configured by the network.

In an embodiment, the TA of the terminal sending the UL positioning reference signal not meeting the requirement configured by the network may be that the TA is greater than a TA threshold, where the TA threshold may be configured by the network.

In an embodiment, when it is determined that the terminal switches from the RRC connected state to the RRC inactive state, or the terminal switches from the RRC connected state to the RRC idle state, the base station sends indication information to the terminal, in which the indication information is used by the terminal to determine whether to send the UL positioning reference signal request. In an embodiment of the present disclosure, indication information is sent to the terminal, in which the indication information indicates information used to determine whether to send the UL positioning reference signal request. In this way, after receiving the indication information, the terminal may determine whether to send the UL positioning reference signal request based on the indication information. That is to say, the terminal may determine whether to send a UL positioning reference signal request based on the indication information from the network. In this way, the situation may be reduced where the UL positioning reference signal request is still sent although the network does not allow the terminal to send the UL positioning reference signal request, which reduces resource occupation and improves the reliability of wireless communication.

It needs to be noted that those skilled in the art may understand that the method provided in the embodiments of the present disclosure may be executed alone or together with some methods in the embodiments of the present disclosure or some methods in the related art.

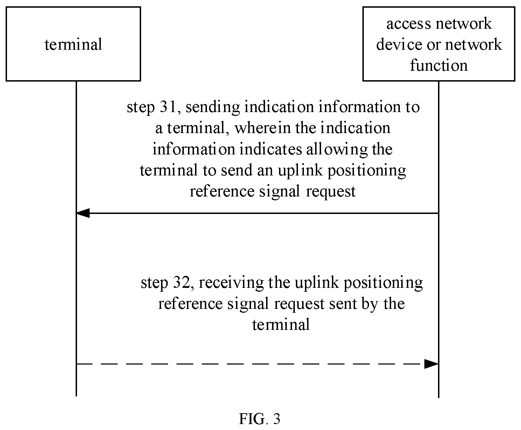

As illustrated in FIG. 3, the embodiment provides a positioning processing method. The method is performed by an access network device or a network function, and the method includes the following step 31.

At step 31, indication information is sent to the terminal.

The indication information indicates allowing the terminal to send a UL positioning reference signal request.

Optionally, the method may further include step 32. At step 32, the UL positioning reference signal request sent by the terminal is received.

In an embodiment, the network function is an LMF.

In an embodiment, the LMF sends indication information to the terminal via a base station through an LPP message, in which the indication information indicates allowing the terminal to send the UL positioning reference signal request.

In an embodiment, the base station sends indication information to the terminal via an RRC message, in which the indication information indicates allowing the terminal to send the UL positioning reference signal request.

In an embodiment, indication information is sent to the terminal, in which the indication information indicates allowing the terminal to send the UL positioning reference signal request. The UL positioning reference signal request is used to request the base station to configure a UL positioning reference signal for the terminal. Thus, if the indication information indicates allowing the terminal to send the UL positioning reference signal request, the terminal may send the UL positioning reference signal request to the access network device to request the base station to configure the UL positioning reference signal for the terminal.

In an embodiment, a condition for sending the UL positioning reference signal request to the terminal is determined based on a predetermined communication protocol, and indication information is sent to the terminal, in which the indication information indicates allowing the terminal to send the UL positioning reference signal request. The UL positioning reference signal request is used to request the base station to configure the UL positioning reference signal for the terminal.

In an embodiment, a condition for sending the UL positioning reference signal request to the terminal is determined based on pre-configured configuration information, and indication information is sent to the terminal, in which the indication information indicates allowing the terminal to send the UL positioning reference signal request. The UL positioning reference signal request is used to request the base station to configure the UL positioning reference signal for the terminal.

In an embodiment, information allowing the terminal to send the UL positioning reference signal request is determined based on predetermined communication protocol information, that is, the indication information is implemented in an implicit manner.

In an embodiment, information allowing the terminal to send the UL positioning reference signal request is determined based on pre-configured configuration information, that is, the indication information is implemented through the pre-configured configuration information.

In this way, after receiving the indication information, if the terminal meets the condition for sending the UL positioning reference signal request, the terminal may send the UL positioning reference signal request to the base station to request the base station to configure a UL positioning reference signal for the terminal. If the terminal does not meet the condition for sending the UL positioning reference signal request, the terminal cannot send the UL positioning reference signal request to the base station to request the base station to configure the UL positioning reference signal for the terminal.

In an embodiment, the condition includes at least one of:
configuration of a UL positioning reference signal being invalid;
a network configuring a UL grant for the terminal to send the UL positioning reference signal request; the network configuring a RACH resource for the terminal to send the UL positioning reference signal request;
a UL positioning reference signal being configured in a system message; or
a message received by the terminal including indication information for indicating the terminal to send the UL positioning reference signal request.

In an embodiment, the way of determining that the configuration of the UL positioning reference signal is invalid includes at least one of:
in response to the terminal moving out of a valid area of the UL positioning reference signal, determining that the configuration of the UL positioning reference signal is invalid;
in response to a timer for the UL positioning reference signal being expired, determining that the configuration of the UL positioning reference signal is invalid;
in response to an RSRP measured by the terminal not meeting a requirement pre-configured by the network, determining that the configuration of the UL positioning reference signal is invalid;
in response to a power for the terminal to send the UL positioning reference signal not meeting a requirement configured by the network, determining that the configuration of the UL positioning reference signal is invalid; or
in response to a TA for the terminal to send the UL positioning reference signal not meeting a requirement configured by the network, determining that the configuration of the UL positioning reference signal is invalid.

It needs to be noted that those skilled in the art may understand that the method provided in the embodiments of the present disclosure may be executed alone or together with some methods in the embodiments of the present disclosure or some methods in the related art.

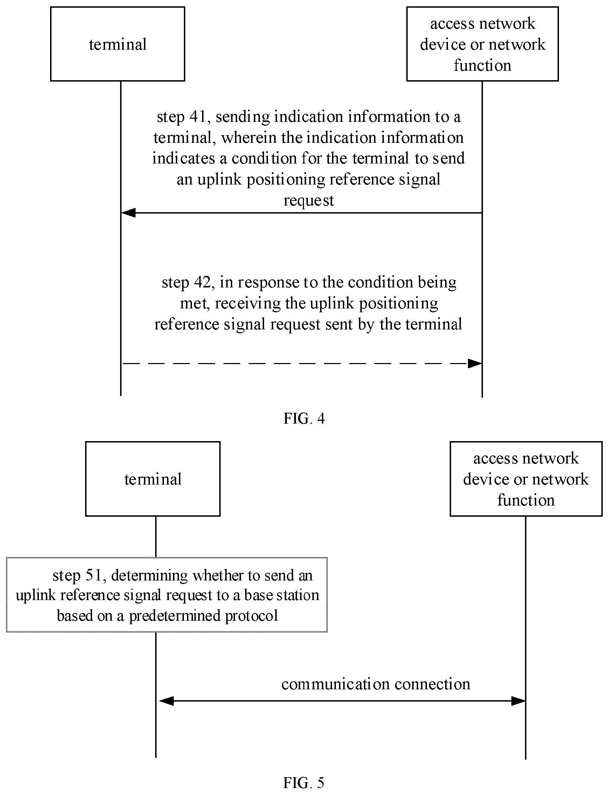

As illustrated in FIG. 4, the embodiment provides a positioning processing method. The method is performed by an access network device or a network function, and the method includes the following step 41.

At step 41, indication information is sent to the terminal.

The indication information indicates a condition for the terminal to send a UL positioning reference signal request.

Optionally, the method may further include step 42. At step 42, in response to the condition being met, the UL positioning reference signal request is received.

In an embodiment, the network function is an LMF.

In an embodiment, the LMF sends indication information to the terminal via a base station through an LPP message, in which the indication information indicates the condition for the terminal to send the UL positioning reference signal request.

In an embodiment, the base station sends indication information to the terminal via an RRC message, in which the indication information indicates the condition for the terminal to send the UL positioning reference signal request.

In an embodiment, indication information is sent to the terminal, in which the indication information indicates the condition for the terminal to send the UL positioning reference signal request. The UL positioning reference signal request is used to request the base station to configure a UL positioning reference signal for the terminal.

In an embodiment, information allowing the terminal to send the UL positioning reference signal request is determined based on a predetermined communication protocol, and indication information is sent to the terminal, in which the indication information indicates the condition for the terminal to send the UL positioning reference signal request. The UL positioning reference signal request is used to request the base station to configure the UL positioning reference signal for the terminal.

In an embodiment, information for allowing the terminal to send the UL positioning reference signal request is determined based on pre-configured configuration information, and indication information is sent to the terminal, in which the indication information indicates the condition for the terminal to send the UL positioning reference signal request. The UL positioning reference signal request is used to request the base station to configure the UL positioning reference signal for the terminal.

In this way, after receiving the indication information, if the terminal meets the condition for sending the UL positioning reference signal request, the terminal may send the UL positioning reference signal request to the base station to request the base station to configure a UL positioning reference signal for the terminal. If the terminal does not meet the condition for sending the UL positioning reference signal request, the terminal cannot send the UL positioning reference signal request to the base station to request the base station to configure a UL positioning reference signal for the terminal.

In an embodiment, the condition includes at least one of:
configuration of a UL positioning reference signal being invalid;
a network configuring a UL grant for the terminal to send the UL positioning reference signal request; the network configuring a RACH resource for the terminal to send the UL positioning reference signal request;
a UL positioning reference signal being configured in a system message; or a message received by the terminal including indication information for indicating the terminal to send the UL positioning reference signal request.

In an embodiment, the way of determining that the configuration of the UL positioning reference signal is invalid includes at least one of:
in response to the terminal moving out of a valid area of the UL positioning reference signal, determining that the configuration of the UL positioning reference signal is invalid;
in response to a timer for the UL positioning reference signal being expired, determining that the configuration of the UL positioning reference signal is invalid;
in response to an RSRP measured by the terminal not meeting a requirement pre-configured by the network, determining that the configuration of the UL positioning reference signal is invalid;
in response to a power for the terminal to send the UL positioning reference signal not meeting a requirement configured by the network, determining that the configuration of the UL positioning reference signal is invalid; or
in response to a TA for the terminal to send the UL positioning reference signal not meeting a requirement configured by the network, determining that the configuration of the UL positioning reference signal is invalid.

It needs to be noted that those skilled in the art may understand that the method provided in the embodiments of the present disclosure may be executed alone or together with some methods in the embodiments of the present disclosure or some methods in the related art.

As illustrated in FIG. 5, the embodiment provides a positioning processing method. The method is executed by a terminal, and the method includes the following step 51.

At step 51, it is determined whether to send a UL reference signal request to a base station based on a predetermined protocol.

In an embodiment, whether to send the UL positioning reference signal request to the base station is determined based on the predetermined protocol, in which the predetermined protocol specifies a condition for the terminal to send the UL positioning reference signal request.

In an embodiment, whether to send the UL positioning reference signal request to the base station is determined based on the predetermined protocol, in which the predetermined protocol specifies the condition for the terminal to send the UL positioning reference signal request. In response to the condition being met, the UL reference signal request is sent to the base station.

For other contents of the process illustrated in FIG. 5, reference may be made to the description of related contents of other embodiments above, which will not be repeated here.

It needs to be noted that those skilled in the art may understand that the method provided in the embodiments of the present disclosure may be executed alone or together with some methods in the embodiments of the present disclosure or some methods in the related art.

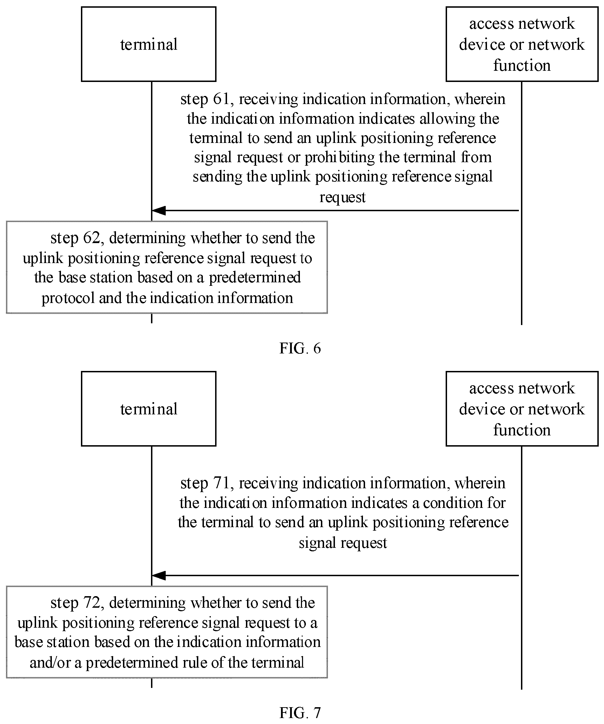

As illustrated in FIG. 6, the embodiment provides a positioning processing method. The method is executed by a terminal, and the method includes the following steps 61-62.

At step 61, indication information is received, in which the indication information indicates allowing the terminal to send a UL positioning reference signal request or prohibiting the terminal from sending the UL positioning reference signal request.

At step 62, it is determined whether to send the UL positioning reference signal request to the base station based on a predetermined protocol and the indication information.

In an embodiment, indication information is received, in which the indication information indicates allowing the terminal to send the UL positioning reference signal request or prohibiting the terminal from sending the UL positioning reference signal request. It is determined whether to send the UL positioning reference signal request to the base station based on a predetermined protocol and the indication information, in which the predetermined protocol specifies a condition for the terminal to send the UL positioning reference signal request.

In an embodiment, indication information is received, in which the indication information indicates allowing the terminal to send the UL positioning reference signal request or prohibiting the terminal from sending the UL positioning reference signal request. In response to the indication information that indicates allowing the terminal to send the UL positioning reference signal request or prohibiting the terminal from sending the UL positioning reference signal request, it is determined whether to send the UL positioning reference signal request to the base station based on a predetermined protocol, in which the predetermined protocol specifies a condition for the terminal to send the UL positioning reference signal request. In response to the condition being met, the UL positioning reference signal request is sent to the base station.

Other contents of the process shown in FIG. 6 may refer to the description of related contents of other embodiments above, which will not be repeated here.

It needs to be noted that those skilled in the art may understand that the method provided in the embodiments of the present disclosure may be executed alone or together with some methods in the embodiments of the present disclosure or some methods in the related art.

As illustrated in FIG. 7, the embodiment provides a positioning processing method. The method is executed by a terminal, and the method includes the following steps 71-72.

At step 71, indication information is received, in which the indication information indicates a condition for the terminal to send a UL positioning reference signal request.

At step 72, it is determined whether to send the UL positioning reference signal request to a base station based on the indication information and/or a predetermined rule of the terminal.

It needs to be noted that the UL positioning reference signal request is sent only in response to the condition being met and the predetermined rule that the UL positioning reference signal request is allowed to be sent. Alternatively, in response to the condition being met and the predetermined rule that the UL positioning reference signal request is not allowed to be sent, the UL positioning reference signal request may not be sent. Alternatively, in response to the condition not being met and the predetermined rule that the UL positioning reference signal request is not allowed to be sent, the UL positioning reference signal request will be not sent.

Other contents of the process shown in FIG. 7 may refer to the description of related contents of other embodiments above, which will not be repeated here.

It needs to be noted that those skilled in the art may understand that the method provided in the embodiments of the present disclosure may be executed alone or together with some methods in the embodiments of the present disclosure or some methods in the related art.

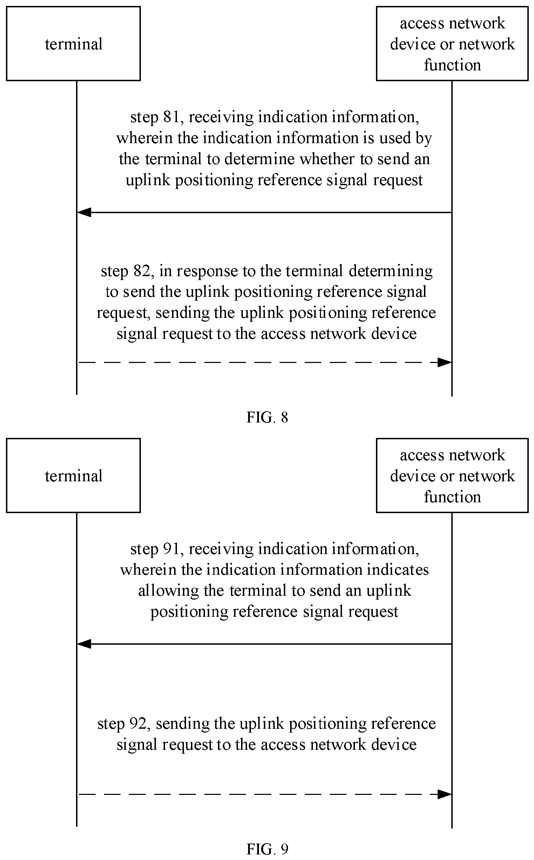

As illustrated in FIG. 8, the embodiment provides a positioning processing method. The method is executed by a terminal, and the method includes the following step 81.

At step 81, indication information is received.

The indication information is used by the terminal to determine whether to send a UL positioning reference signal request. In an example, the indication information indicates whether the terminal is allowed to send the UL positioning reference signal request. Optionally, the indication information is also used to indicate a condition for allowing the terminal to send the UL positioning reference signal request.

Optionally, if the terminal is not allowed to send the UL positioning reference signal request, the terminal will not send the UL positioning reference signal request to the base station. Alternatively, if the terminal is allowed to send the UL positioning reference signal request but does not meet the condition for sending the UL positioning reference signal request, the terminal will not send the UL positioning reference signal request to the base station.

Optionally, the method may further include step 82. At step 82, in response to the terminal determining to send the UL positioning reference signal request, the UL positioning reference signal request is sent to an access network device.

Here, the terminal involved in the present disclosure may be, but not limited to, a mobile phone, a wearable device, a vehicle-mounted terminal, an RSU, a smart home terminal, an industrial sensor device and/or a medical device, etc. In some embodiments, the terminal may be a Redcap terminal or an NR terminal of a predetermined version (e.g., an NR terminal of Release 17).

The access network device involved in the present disclosure may be a base station, and the base station may be various types of base stations, for example, a base station of a 3G network, a base station of a 4G network, a base station of a 5G network, or other evolved base stations.

The network function involved in the present disclosure may be a device in a core network. For example, the network function may be an LMF. Of course, the network function may also be other evolved network functions, which is not limited here. For example, in a 5G network, the LMF is a network function that provides a positioning function. For another example, in a 4G network, an ESMLC is a network function that provides a positioning function. It may be understood that in other networks, it may be other network functions.

In an embodiment, indication information sent by the access network device or the network function is received, in which the indication information is used by the terminal to determine whether to send the UL positioning reference signal request. The UL positioning reference signal request is used to request a base station to configure a UL positioning reference signal for the terminal.

In an embodiment, indication information sent by the access network device or the network function is received, in which the indication information indicates allowing the terminal to send the UL positioning reference signal request. The UL positioning reference signal request is used to request the base station to configure the UL positioning reference signal for the terminal.

In an embodiment, indication information sent by the access network device or the network function is received, in which the indication information indicates that the terminal is not allowed to send the UL positioning reference signal request. The UL positioning reference signal request is used to request the base station to configure the UL positioning reference signal for the terminal. For example, when the network does not support positioning of the terminal based on the UL positioning reference signal and/or a positioning resource used for positioning is less than a resource threshold, the network does not allow the terminal to send the UL positioning reference signal request.

In an embodiment, indication information is received, in which the indication information indicates allowing the terminal to send the UL positioning reference signal request, and a condition for the terminal to send the UL positioning reference signal request. The UL positioning reference signal request is used to request the base station to configure the UL positioning reference signal for the terminal. For example, when the network supports the positioning of the terminal based on the UL positioning reference signal and/or the positioning resource used for positioning is greater than the resource threshold, the network allows the terminal to send the UL positioning reference signal request.

In an embodiment, indication information sent by the access network device or the network function is received, in which the indication information indicates the condition for the terminal to send the UL positioning reference signal request; the UL positioning reference signal request is used to request the base station to configure a UL positioning reference signal for the terminal. For example, the indication information indicates that the terminal sends the UL positioning reference signal request and indicates a condition that the terminal sends the UL positioning reference signal request, in which the condition includes a condition for the terminal to send the UL positioning reference signal request.

It should be noted that the "indication" in the embodiments of the present application includes explicit indication and implicit indication. For example, the network may explicitly indicate the condition for the terminal to send the UL positioning reference signal request. In an example, it may be considered that the network indicates in an implicit indication manner that the terminal is allowed to send the UL positioning reference signal request. Alternatively, the network does not explicitly indicate the condition for the terminal to send the UL positioning reference signal request. In this example, it may be considered that the network indicates in an implicit manner that the terminal is not allowed to send the UL positioning reference signal request. In an embodiment, indication information sent by the base station is received, in which the indication information is used by the terminal to determine whether to send the UL positioning reference signal request. The UL positioning reference signal request is used to request the base station to configure a UL positioning reference signal for the terminal.

In an embodiment, indication information sent by the base station is received through an RRC message, in which the indication information is used by the terminal to determine whether to send the UL positioning reference signal request. The UL positioning reference signal request is used to request the base station to configure the UL positioning reference signal for the terminal. It needs to be noted that the base station may configure the indication information is carried in a predetermined field in the RRC message. For example, the RRC message is, for example, an RRC release message (RRC release) or an RRC reconfiguration message (RRC reconfiguration).

In an embodiment, the network function is the LMF.

In an embodiment, indication information sent by the LMF via a base station is received, in which the indication information indicates determination of whether to send the UL positioning reference signal request. The UL positioning reference signal request is used to request the base station to configure the UL positioning reference signal for the terminal.

In an embodiment, indication information is received from the LMF via a base station through an LPP message, in which the indication information is used by the terminal to determine whether to send the UL positioning reference signal request. The UL positioning reference signal request is used to request the base station to configure the UL positioning reference signal for the terminal.

In an embodiment, indication information is received, in which the indication information indicates allowing the terminal to send the UL positioning reference signal request or prohibiting the terminal from sending the UL positioning reference signal request. The UL positioning reference signal request is used to request the base station to configure the UL positioning reference signal for the terminal. In this way, if the indication information indicates allowing the terminal to send the UL positioning reference signal request, the terminal may send the UL positioning reference signal request to the base station to request the base station to configure the UL positioning reference signal for the terminal. If the indication information indicates prohibiting the terminal from sending the UL positioning reference signal request, the terminal cannot send the UL positioning reference signal request to the base station to request the base station to configure the UL positioning reference signal for the terminal. Alternatively, if the indication information indicates prohibiting the terminal from sending the UL positioning reference signal request, the base station will not respond to the UL positioning reference signal request.

In an embodiment, information allowing the terminal to send the UL positioning reference signal request is determined based on a predetermined communication protocol, and indication information is received, in which the indication information indicates the condition for the terminal to send the UL positioning reference signal request. The UL positioning reference signal request is used to request the base station to configure the UL positioning reference signal for the terminal.

In an embodiment, information allowing the terminal to send the UL positioning reference signal request is determined based on pre-configured configuration information, and indication information is received, in which the indication information indicates the condition for the terminal to send the UL positioning reference signal request. The UL positioning reference signal request is used to request the base station to configure the UL positioning reference signal for the terminal.

In this way, after receiving the indication information, if the terminal meets the condition for sending the UL positioning reference signal request, the terminal may send the UL positioning reference signal request to the base station to request the base station to configure a UL positioning reference signal for the terminal. If the terminal does not meet the condition for sending the UL positioning reference signal request, the terminal cannot send the UL positioning reference signal request to the base station to request the base station to configure a UL positioning reference signal for the terminal. In this way, whether to send a UL reference signal request may be adapted to the indication of the base station, and it may be clearly determined whether to send the UL positioning reference signal request. As such, the situation may be reduced where the UL positioning reference signal request is still sent although the network does not allow the terminal to send the UL positioning reference signal request, which reduces resource occupation and improves the reliability of wireless communication.

In an embodiment, it is determined based on a predetermined communication protocol that the condition for the terminal to send the UL positioning reference signal request is configured, and indication information is received, in which the indication information indicates information allowing the terminal to send the UL positioning reference signal request. The UL positioning reference signal request is used to request the base station to configure the UL positioning reference signal for the terminal.

In an embodiment, it is determined based on pre-configured configuration information that the condition for the terminal to send the UL positioning reference signal request is configured, and indication information is received, in which the indication information indicates information allowing the terminal to send the UL positioning reference signal request. The UL positioning reference signal request is used to request the base station to configure the UL positioning reference signal for the terminal.

In an embodiment, indication information is received, in which the indication information indicates information allowing the terminal to send the UL positioning reference signal request, and a condition for the terminal to send the UL positioning reference signal request. The UL positioning reference signal request is used to request the base station to configure the UL positioning reference signal for the terminal. The condition includes at least one of: configuration of a UL positioning reference signal being invalid; a network configuring a UL grant for the terminal to send the UL positioning reference signal request; the network configuring a random access channel (RACH) resource for the terminal to send the UL positioning reference signal request; a UL positioning reference signal being configured in a system message; or a message received by the terminal including indication information for indicating the terminal to send the UL positioning reference signal request. For example, the message is a paging message.

It needs to be noted that, in some examples, the UL positioning reference signal is configured for the terminal. Even though the UL positioning reference signal may be configured in the system message broadcast and sent by the network, the terminal also needs to obtain the UL positioning reference signal configured by the network for the terminal through interaction with the base station. In an embodiment, indication information is received, in which the indication information indicates a condition for the terminal to send the UL positioning reference signal request. The UL positioning reference signal request is used to request the base station to configure the UL positioning reference signal for the terminal. The condition includes at least one of: configuration of a UL positioning reference signal being invalid; a network configuring a UL grant for the terminal to send the UL positioning reference signal request; the network configuring a RACH resource for the terminal to send the UL positioning reference signal request; a UL positioning reference signal being configured in a system message; or a paging message received by the terminal including indication information for indicating the terminal to send the UL positioning reference signal request.

**In** an example, the way of determining that the configuration of the UL positioning reference signal is invalid may include at least one of:
in response to the terminal moving out of a valid area of the UL positioning reference signal, determining that the configuration of the UL positioning reference signal is invalid;
in response to a timer for the UL positioning reference signal being expired, determining that the configuration of the UL positioning reference signal is invalid;
in response to an RSRP measured by the terminal not meeting a requirement pre-configured by the network, determining that the configuration of the UL positioning reference signal is invalid;
in response to a power for the terminal to send the UL positioning reference signal not meeting a requirement configured by the network, determining that the configuration of the UL positioning reference signal is invalid; or
in response to a TA for the terminal to send the UL positioning reference signal not meeting a requirement configured by the network, determining that the configuration of the UL positioning reference signal is invalid.

In some examples, when configuring a UL positioning reference signal for a terminal, the base station also configures the valid area of the UL positioning reference signal, where the valid area includes, for example, a cell list. In other words, when the terminal is located within the valid area of the UL positioning reference signal, the UL positioning reference signal configured by the base station may be used for positioning. When the terminal is located outside the valid area of the UL positioning reference signal, the UL positioning reference signal cannot be used for positioning. For example, in a cell reselection or cell handover scenario, when the cell to which the terminal reselects or performs handover is not located within the valid area, the configuration of the UL positioning reference signal is invalid. When the cell to which the terminal reselects or performs handover is located within the valid area, the configuration of the UL positioning reference signal is valid.

In an embodiment, when configuring the UL positioning reference signal for the terminal, the base station also configures the timer for the UL positioning reference signal. The timer for the UL positioning reference signal is used to perform timing on a valid period of the configuration of the UL positioning reference signal. When the timer expires, the configuration of the UL positioning reference signal is invalid.

In an embodiment, the timer for the UL positioning reference signal may be started when the terminal receives the configuration of the UL positioning reference signal.

In an embodiment, the RSRP measured by the terminal not meeting the requirement pre-configured by the network may be that the RSRP is less than an RSRP threshold, where the RSRP may be configured by the network.

In an embodiment, the power of the UL positioning reference signal sent by the terminal not meeting the requirement configured by the network may be that the power is less than a power threshold, where the power threshold may be configured by the network.

In an embodiment, the TA of the terminal sending the UL positioning reference signal not meeting the requirement configured by the network may be that the TA is greater than a TA threshold, where the TA threshold may be configured by the network.

In an embodiment, when it is determined that the terminal switches from the RRC connected state to the RRC inactive state, or the terminal switches from the RRC connected state to the RRC idle state, the base station sends indication information to the terminal, in which the indication information is used by the terminal to determine whether to send the UL positioning reference signal request.

In an embodiment of the present disclosure, indication information is received, in which the indication information indicates information used to determine whether to send the UL positioning reference signal request. In this way, after receiving the indication information, the terminal may determine whether to send the UL positioning reference signal request based on the indication information. That is to say, the terminal may determine whether to send a UL positioning reference signal request based on the indication information from the network. In this way, the situation may be reduced where the UL positioning reference signal request is still sent although the network does not allow the terminal to send the UL positioning reference signal request, which reduces resource occupation and improves the reliability of wireless communication.

It needs to be noted that those skilled in the art may understand that the method provided in the embodiments of the present disclosure may be executed alone or together with some methods in the embodiments of the present disclosure or some methods in the related art.

As illustrated in FIG. 9, the embodiment provides a positioning processing method. The method is executed by a terminal, and the method includes the following step 91.

At step 91, indication information is received.

The indication information indicates allowing the terminal to send a UL positioning reference signal request.

Optionally, the method may further include step 92. At step 92, the UL positioning reference signal request is sent to an access network device.

In an embodiment, the network function is an LMF.

In an embodiment, the terminal receives indication information sent by the LMF via a base station through an LPP message, in which the indication information indicates allowing the terminal to send the UL positioning reference signal request.

In an embodiment, the terminal receives indication information sent by the base station through an RRC message, in which the indication information indicates allowing the terminal to send the UL positioning reference signal request.

In an embodiment, indication information is received, in which the indication information indicates allowing the terminal to send the UL positioning reference signal request. The UL positioning reference signal request is used to request the base station to configure a UL positioning reference signal for the terminal. Thus, if the indication information indicates allowing the terminal to send the UL positioning reference signal request, the terminal may send the UL positioning reference signal request to the access network device to request the base station to configure the UL positioning reference signal for the terminal.

In an embodiment, it is determined based on a predetermined communication protocol that a condition for the terminal to send the UL positioning reference signal request is configured, and indication information is received, in which the indication information indicates allowing the terminal to send the UL positioning reference signal request. The UL positioning reference signal request is used to request the base station to configure the UL positioning reference signal for the terminal.

In an embodiment, it is determined based on pre-configured configuration information that a condition for the terminal to send the UL positioning reference signal request is configured, and indication information is received, in which the indication information indicates allowing the terminal to send the UL positioning reference signal request. The UL positioning reference signal request is used to request the base station to configure the UL positioning reference signal for the terminal.

In an embodiment, information allowing the terminal to send the UL positioning reference signal request is determined based on predetermined communication protocol information, that is, the indication information is implemented in an implicit manner.

In an embodiment, information allowing the terminal to send the UL positioning reference signal request is determined based on pre-configured configuration information, that is, the indication information is implemented through the pre-configured configuration information.

In this way, after receiving the indication information, if the terminal meets the condition for sending the UL positioning reference signal request, the terminal may send the UL positioning reference signal request to the base station to request the base station to configure a UL positioning reference signal for the terminal. If the terminal does not meet the condition for sending the UL positioning reference signal request, the terminal cannot send the UL positioning reference signal request to the base station to request the base station to configure the UL positioning reference signal for the terminal.

In an embodiment, the condition includes at least one of:
configuration of a UL positioning reference signal being invalid;
a network configuring a UL grant for the terminal to send the UL positioning reference signal request; the network configuring a RACH resource for the terminal to send the UL positioning reference signal request;
a UL positioning reference signal being configured in a system message; or a message received by the terminal including indication information for indicating the terminal to send the UL positioning reference signal request.

In an embodiment, the way of determining that the configuration of the UL positioning reference signal is invalid includes at least one of:
in response to the terminal moving out of a valid area of the UL positioning reference signal, determining that the configuration of the UL positioning reference signal is invalid;
in response to a timer for the UL positioning reference signal being expired, determining that the configuration of the UL positioning reference signal is invalid;
in response to an RSRP measured by the terminal not meeting a requirement pre-configured by the network, determining that the configuration of the UL positioning reference signal is invalid;
in response to a power for the terminal to send the UL positioning reference signal not meeting a requirement configured by the network, determining that the configuration of the UL positioning reference signal is invalid; or
in response to a TA for the terminal to send the UL positioning reference signal not meeting a requirement configured by the network, determining that the configuration of the UL positioning reference signal is invalid.

It needs to be noted that those skilled in the art may understand that the method provided in the embodiments of the present disclosure may be executed alone or together with some methods in the embodiments of the present disclosure or some methods in the related art.

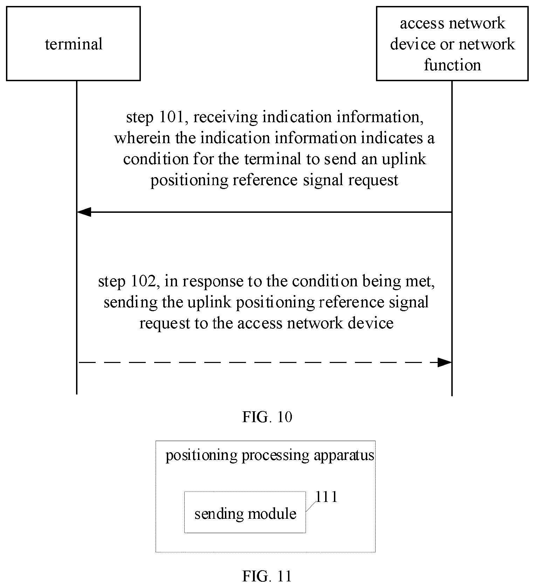

As illustrated in FIG. 10, the embodiment provides a positioning processing method. The method is executed by a terminal, and the method includes the following step 101.

At step 101, indication information is received.

The indication information indicates a condition for the terminal to send a UL positioning reference signal request.

Optionally, the method may further include step 102. At step 102, in response to the condition being met, the UL positioning reference signal request is sent to the access network device.

In an embodiment, the network function is an LMF.

In an embodiment, the terminal receives indication information sent by the LMF via a base station through an LPP message, in which the indication information indicates the condition for the terminal to send the UL positioning reference signal request.

In an embodiment, the terminal receives indication information sent by the base station through an RRC message, in which the indication information indicates the condition for the terminal to send the UL positioning reference signal request.

In an embodiment, indication information is received, in which the indication information indicates the condition for the terminal to send the UL positioning reference signal request. The UL positioning reference signal request is used to request the base station to configure a UL positioning reference signal for the terminal.

In an embodiment, information allowing the terminal to send the UL positioning reference signal request is determined based on a predetermined communication protocol, and indication information is received, in which the indication information indicates the condition for the terminal to send the UL positioning reference signal request. The UL positioning reference signal request is used to request the base station to configure the UL positioning reference signal for the terminal.

In an embodiment, information allowing the terminal to send the UL positioning reference signal request is determined based on pre-configured configuration information, and indication information is received, in which the indication information indicates a condition for the terminal to send the UL positioning reference signal request. The UL positioning reference signal request is used to request the base station to configure the UL positioning reference signal for the terminal.

In this way, after receiving the indication information, if the terminal meets the condition for sending the UL positioning reference signal request, the terminal may send the UL positioning reference signal request to the base station to request the base station to configure a UL positioning reference signal for the terminal. If the terminal does not meet the condition for sending the UL positioning reference signal request, the terminal cannot send the UL positioning reference signal request to the base station to request the base station to configure a UL positioning reference signal for the terminal.

In an embodiment, the condition includes at least one of:
configuration of a UL positioning reference signal being invalid;
a network configuring a UL grant for the terminal to send the UL positioning reference signal request; the network configuring a RACH resource for the terminal to send the UL positioning reference signal request;
a UL positioning reference signal being configured in a system message; or a paging message received by the terminal including indication information for indicating the terminal to send the UL positioning reference signal request.

In an example, the way of determining that the configuration of the UL positioning reference signal is invalid may include at least one of:
in response to the terminal moving out of a valid area of the UL positioning reference signal, determining that the configuration of the UL positioning reference signal is invalid;
in response to a timer for the UL positioning reference signal being expired, determining that the configuration of the UL positioning reference signal is invalid;
in response to an RSRP measured by the terminal not meeting a requirement pre-configured by the network, determining that the configuration of the UL positioning reference signal is invalid;
in response to a power for the terminal to send the UL positioning reference signal not meeting a requirement configured by the network, determining that the configuration of the UL positioning reference signal is invalid; or
in response to a TA for the terminal to send the UL positioning reference signal not meeting a requirement configured by the network, determining that the configuration of the UL positioning reference signal is invalid.

It needs to be noted that those skilled in the art may understand that the method provided in the embodiments of the present disclosure may be executed alone or together with some methods in the embodiments of the present disclosure or some methods in the related art.

In order to better understand the embodiments of the present disclosure, the technical solution of the present disclosure is further described below through an exemplary embodiment.

### Example 1:

In an embodiment, a gNB sends, to a UE, indication information allowing the UE to send a UL positioning reference signal request, and/or a condition for the UE to send a UL positioning reference signal request.

In an embodiment, the indication information indicates that the UE may send the UL positioning reference signal request to the gNB, or the UE may send the UL positioning reference signal request to the gNB in the case that a request condition is met.

In an embodiment, the condition for the UE to send the UL positioning reference signal request includes at least one of:
a UL positioning reference signal being invalid;
a UL grant configured by the network for the UE to send the request;
a RACH resource configured by the network for the UE to send the request;
a UL positioning reference signal being configured in a system message; or a paging message received by the terminal including indication information for indicating the terminal to send the UL positioning reference signal request.

In an embodiment, the situation where the UL positioning reference signal is valid includes at least one of:
a situation where the UE moves out of a valid area of the UL positioning reference signal;
a situation where a timer for the UL positioning reference signal is expired;
a situation where an RSRP measured by the UE does not meet a requirement pre-configured by the network;
a situation where a power for the UE to send the UL positioning reference signal does not meet a requirement configured by the network; or
a situation where a TA for the UE to send the UL positioning reference signal does not meet a requirement configured by the network.

In an embodiment, when configuring a UL positioning reference signal for the UE, the gNB sends the indication information and/or the request condition, and an implementation of the sending is through an RRC message.

In an embodiment, the LMF sends the indication information and/or the request condition to the UE.

In an embodiment, the UE determines to send the UL positioning reference signal request to the gNB based on the indication information and/or the request condition.

In an embodiment, the UL positioning reference signal request is sent to the gNB when the UE meets any of the following conditions:
a condition that the UE moves out of a valid area of the UL positioning reference signal;
a condition that a timer for the UL positioning reference signal is expired;
a condition that an RSRP measured by the UE does not meet a requirement pre-configured by the network;
a condition that a power for the UE to send the UL positioning reference signal does not meet a requirement configured by the network; or
a condition that a TA for the UE to send the UL positioning reference signal does not meet a requirement configured by the network.
a condition that a UL grant is configured by the network for the UE to send the request;
a condition that a RACH resource is configured by the network for the UE to send the request;
a condition that a UL positioning reference signal is configured in a system message; or
a condition that indication information indicating the UE to send the UL positioning reference signal request is included in a paging message received by the UE.

As illustrated in FIG. 11, an embodiment of the present disclosure provides a positioning processing apparatus, which includes a sending module 111 configured to send indication information to a terminal, in which the indication information indicates information for determining whether to send a UL positioning reference signal request.

It needs to be noted that those skilled in the art may understand that the method provided in the embodiments of the present disclosure may be executed alone or together with some methods in the embodiments of the present disclosure or some methods in the related art.

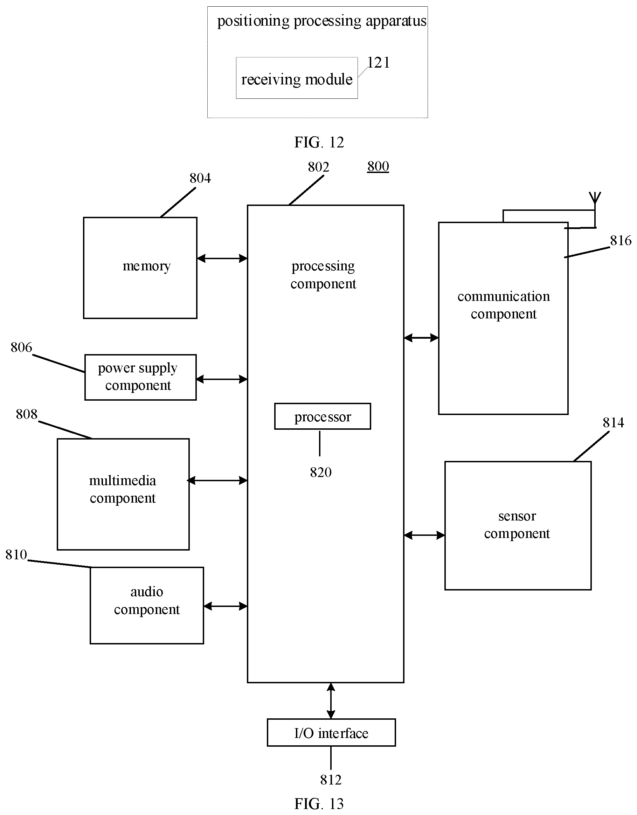

As illustrated in FIG. 12, an embodiment of the present disclosure provides a positioning processing apparatus, which includes a receiving module 121 configured to receive indication information to a terminal, in which the indication information indicates information for determining whether to send a UL positioning reference signal request.

It needs to be noted that those skilled in the art may understand that the method provided in the embodiments of the present disclosure may be executed alone or together with some methods in the embodiments of the present disclosure or some methods in the related art.

The present disclosure provides a communication device, including: a processor; and a memory storing instructions executable by the processor. The processor is configured to execute the executable instructions to implement the method applied to any embodiment of the present disclosure.

The processor may include various types of storage media, which are non-transitory computer storage media that may continue to memorize information stored thereon after the communication device loses power.

The processor may be connected to the memory via a bus or the like to read an executable program stored in the memory.

An embodiment of the present disclosure further provides a computer storage medium storing a computer executable program. When the executable program is executed by a processor, the method of any embodiment of the present disclosure is implemented.

Regarding the apparatuses in the above embodiments, the specific implementations in which each module performs operations have been described in detail in the method embodiments, which will not be elaborated here.

As illustrated in FIG. 13, an embodiment of the present disclosure provides a structure of a terminal.

Referring to FIG. 13, the embodiment of the present disclosure provides a terminal 800. Specifically, the terminal 800 may be a mobile phone, a computer, a digital broadcasting terminal, a message transceiver device, a gaming console, a tablet device, a medical device, a fitness device, a personal digital assistant, etc.

Referring to FIG. 13, the terminal 800 may include one or more of the following components: a processing component 802, a memory 804, a power supply component 806, a multimedia component 808, an audio component 810, an input/output interface (I/O) 812, a sensor component 814, and a communication component 816.

The processing component 802 generally controls the overall operations of the terminal 800, such as operations associated with displays, telephone calls, data communications, camera operations, and recording operations. The processing component 802 may include one or more processors 820 to execute instructions to accomplish all or some of the steps of the method described above. Alternatively, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operation at the terminal 800. Examples of such data include instructions for any application or method operated on the terminal 800, contact data, phone book data, messages, pictures, videos, etc. The memory 804 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or CD-ROM.

The power supply component 806 provides power to the various components of the terminal 800. The power supply component 806 may include a power management system, one or more power supplies, and other components associated with generating, managing, and distributing power for the terminal 800.

The multimedia component 808 includes a screen providing an output interface between the terminal 800 and a user. In some embodiments, the screen may include a liquid crystal display (LCD) and a touch panel (TP). In the case that the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a duration and pressure associated with the touch or swipe operation. In some embodiments, the multimedia component 808 includes a front-facing camera and/or a rear-facing camera. The front camera and/or the rear camera may receive external multimedia data when the terminal 800 is in an operating mode, such as a shooting mode or a video mode. Each of the front camera and the rear camera may be a fixed optical lens system or has a focal length and optical zoom capability.

The audio component 810 is configured to output and/or input audio signals. For example, the audio component 810 includes a microphone (MIC) that is configured to receive external audio signals when the terminal 800 is in an operating mode, such as a call mode, a recording mode, and a voice recognition mode. The received audio signals may be further stored in the memory 804 or sent in the communication component 816. In some embodiments, the audio component 810 further includes a speaker for outputting audio signals.

The I/ O interface 812 provides an interface between the processing component 802 and a peripheral interface module, said peripheral interface module may be a keypad, a click wheel, buttons, etc. These buttons may include, but are not limited to: a home button, a volume button, a start button, and a lock button.

The sensor component 814 includes one or more sensors for providing various aspects of status assessment for the terminal 800. For example, the sensor component 814 may detect an open/closed state of the terminal 800, the relative positioning of components (such as the display and keypad of the terminal 800), the sensor component 814 may also detect a change in the position of the terminal 800 or a component of the terminal 800, a presence or absence of user contact with the terminal 800, an orientation of the terminal 800 or an acceleration/deceleration of the terminal 800, and a temperature change of the terminal 800. The sensor component 814 may include a proximity sensor configured to detect the presence of a nearby object in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate communication between the terminal 800 and other devices by wired or wireless means. The terminal 800 may access a wireless network based on a communication standard, such as Wi-Fi, 4G or 5G, or their combination. In an exemplary embodiment, the communication component 816 receives broadcast signals or broadcast-related information from an external broadcast management system in a broadcast channel. In an exemplary embodiment, the communication component 816 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the terminal 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 804 including instructions, the instructions being executable by a processor 820 of the terminal 800 for accomplishing the above-described method. For example, the non-transitory computer-readable storage medium may be a ROM, a random access memory (RAM), a CD-ROM, a magnetic tape, floppy disks, and optical data storage devices, etc.

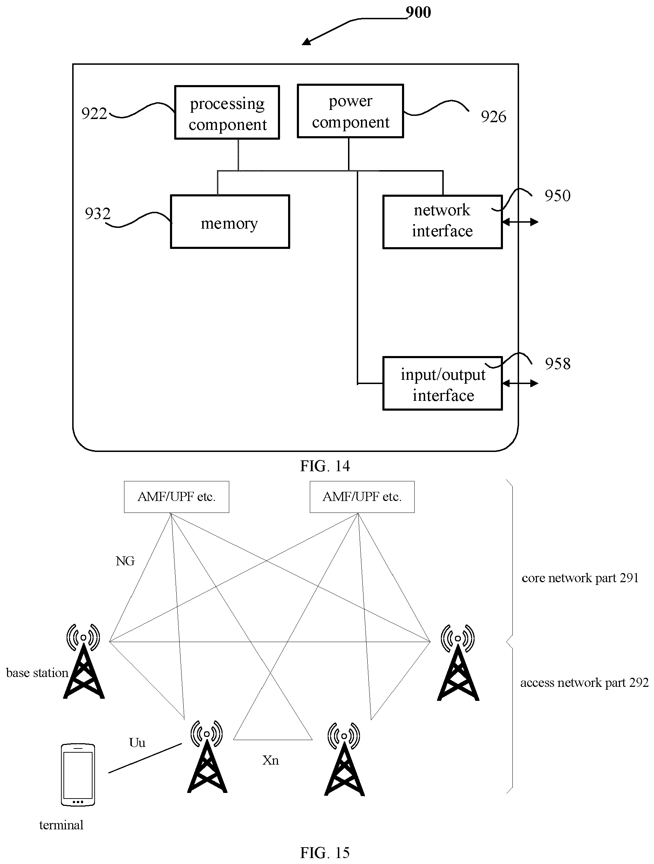

Referring to FIG. 14, an embodiment of the disclosure shows a structure of a base station. For example, the base station 900 may be provided as a network side device. Referring to FIG. 14, the base station 900 includes a processing component 922, which further includes one or more processors, and a memory resource represented by a memory 932 for storing instructions that may be executed by the processing component 922, such as an application program. The application program stored in memory 932 may include one or more modules each corresponding to a set of instructions. Alternatively, the processing component 922 is configured to execute the instructions to perform any of the methods applied to the base station as described in the foregoing method.

The base station 900 may also include a power component 926 configured to perform power management of the base station 900, a wired or wireless network interface 950 configured to connect the base station 900 to a network, and an input/output (I/O) interface 958. The base station 900 may operate an operating system based on the operating system stored in the memory 932, such as Windows Server ^{™}, Mac OS X^{™}, Unix^{™}, Linux^{™}, FreeBSD^{™}, or the like.

As illustrated in FIG. 15, an embodiment of the present disclosure shows a network architecture of a 5G system, including a core network part 291 and an access network part 292. The core network part includes a core network device, and the core network device mainly includes communication nodes such as an AMF, a UPF, a network exposure function (NEF), a user data repository (UDR) and an SMF. The access network part includes base stations. The AMF is mainly responsible for registration management, connection management, access management, mobility management, and various functions related to security and access management and authorization. The UPF is mainly responsible for various functions related to a data plane anchor point, a PDU session point connecting to a data network, message routing and forwarding, traffic usage reporting and legal monitoring. The NEF is mainly responsible for related functions that provide a secure way to expose services and capabilities of 3rd Generation Partnership Project (3GPP) network functions to an application function (AF) and provide a secure way for the AF to provide information to the 3GPP network functions. The UDR is mainly responsible for storing important process data during wireless communication. The SMF is mainly responsible for various functions related to session management, billing and QoS policy control, legal monitoring, billing data collection and downlink data notification.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. A positioning processing method, performed by an access network device or a network function, the method comprising:
sending indication information to a terminal, wherein the indication information is used by the terminal to determine whether to send an uplink (UL) positioning reference signal request.

2. The method according to claim 1, wherein the network function is a location management function (LMF).

3. The method according to claim 1, wherein the indication information indicates at least one of:
allowing the terminal to send the UL positioning reference signal request; or
a condition that the terminal sends the UL positioning reference signal request.

4. The method according to claim 3, wherein the condition comprises at least one of:
configuration of a UL positioning reference signal being invalid;
a network configuring a UL grant for the terminal to send the UL positioning reference signal request;
the network configuring a random access channel (RACH) resource for the terminal to send the UL positioning reference signal request;
a UL positioning reference signal being configured in a system message; or
a message received by the terminal comprising indication information for indicating the terminal to send the UL positioning reference signal request.

5. The method according to claim 4, comprising at least one of:
in response to the terminal moving out of a valid area of the UL positioning reference signal, determining that the configuration of the UL positioning reference signal is invalid;
in response to a timer for the UL positioning reference signal being expired, determining that the configuration of the UL positioning reference signal is invalid;
in response to a reference signal receiving power (RSRP) measured by the terminal not meeting a requirement pre-configured by the network, determining that the configuration of the UL positioning reference signal is invalid;
in response to a power for the terminal to send the UL positioning reference signal not meeting a requirement configured by the network, determining that the configuration of the UL positioning reference signal is invalid; or
in response to a timing advance (TA) for the terminal to send the UL positioning reference signal not meeting a requirement configured by the network, determining that the configuration of the UL positioning reference signal is invalid.

6. The method according to claim 1, wherein sending the indication information to the terminal comprises:
in response to determining that the terminal switches from a radio resource control (RRC) connected state to an RRC inactive state or the terminal switches from the RRC connected state to an RRC idle state, sending the indication information to the terminal.

7. A positioning processing method, performed by a terminal, the method comprising:
receiving indication information, wherein the indication information is used by the terminal to determine whether to send an uplink (UL) positioning reference signal request.

8. The method according to claim 7, wherein receiving the indication information comprises:
receiving the indication information sent by an access network device; or
receiving the indication information sent by a network function.

9. The method according to claim 8, wherein the network function is a location management function (LMF).

10. The method according to claim 7, wherein the indication information indicates at least one of:
allowing the terminal to send the UL positioning reference signal request; or
a condition that the terminal sends the UL positioning reference signal request.

11. The method according to claim 10, wherein the condition comprises at least one of:
configuration of a UL positioning reference signal being invalid;
a network configuring a UL grant for the terminal to send the UL positioning reference signal request;
the network configuring a random access channel (RACH) resource for the terminal to send the UL positioning reference signal request;
a UL positioning reference signal being configured in a system message; or
a paging message received by the terminal comprising indication information for indicating the terminal to send the UL positioning reference signal request.

12. The method according to claim 11, comprising at least one of:
in response to the terminal moving out of a valid area of the UL positioning reference signal, determining that the configuration of the UL positioning reference signal is invalid;
in response to a timer for the UL positioning reference signal being expired, determining that the configuration of the UL positioning reference signal is invalid;
in response to a reference signal receiving power (RSRP) measured by the terminal not meeting a requirement pre-configured by the network, determining that the configuration of the UL positioning reference signal is invalid;
in response to a power for the terminal to send the UL positioning reference signal not meeting a requirement configured by the network, determining that the configuration of the UL positioning reference signal is invalid; or
in response to a timing advance (TA) for the terminal to send the UL positioning reference signal not meeting a requirement configured by the network, determining that the configuration of the UL positioning reference signal is invalid.

13. The method according to claim 7, wherein receiving the indication information comprises:
in response to determining that the terminal switches from a radio resource control (RRC) connected state to an RRC inactive state or the terminal switches from the RRC connected state to an RRC idle state, receiving the indication information.

14. A positioning processing apparatus, comprising:
a sending module, configured to indication information to a terminal, wherein the indication information is used by the terminal to determine whether to send an uplink (UL) positioning reference signal request.

15. A positioning processing apparatus, comprising:
a receiving module, configured to receive indication information, wherein the indication information is used by the terminal to determine whether to send an uplink (UL) positioning reference signal request.

16. A communication device, comprising: an antenna; a memory; and a processor, connected to the antenna and the memory respectively,
wherein the processor is configured to control transmission and reception of the antenna and implement the method according to any one of claims 1 to 6 or any one of claims 7 to 13 by executing computer executable instructions stored in the memory.

17. A computer storage medium storing computer executable instructions that, when executed by a processor, implement the method according to any one of claims 1 to 6 or any one of claims 7 to 13.
